# EUROPEAN PATENT SPECIFICATION

(11) **EP 0 394 071 B1**
(45) Date of publication and mention of the grant of the patent: **08.06.1994**
(21) Application number: 90304301.6
(22) Date of filing: 20.04.1990
(51) Int. Cl.: H04N 5/232, H04R 3/12

(54) **Video camera systems**
Videokamerasysteme
Systèmes de caméra vidéo

(30) Priority: 21.04.1989 JP 102091/89; 25.04.1989 JP 105076/89
(43) Date of publication of application: 24.10.1990
(73) Proprietor: SONY CORPORATION, Tokyo 141 (JP)
(72) Inventor: Nakamura, Takashi, c/o Patents Division, Shinagawa-ku, Tokyo 141 (JP); Yasukochi, Yoshimi, c/o Patents Division, Shinagawa-ku, Tokyo 141 (JP); Munakata, Tamotsu, c/o Patents Division, Shinagawa-ku, Tokyo 141 (JP); Nakashima, Masaharu, c/o Patents Division, Shinagawa-ku, Tokyo 141 (JP)
(74) Representative: Thomas, Christopher Hugo

(56) References cited:
- EP-A- 0 080 771
- US-A- 4 300 166
- US-A- 4 326 221

## Description

This invention relates to video camera systems.

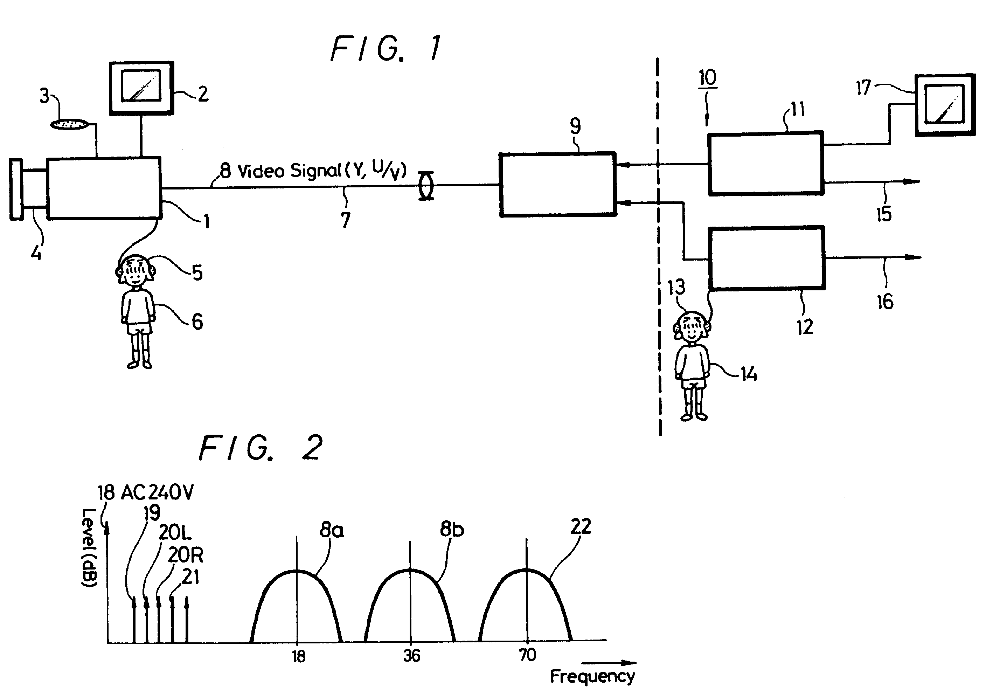

A known video camera system for a studio or for an outside broadcast van is as shown in Figure 1, and includes a camera head unit (CHU) 1, that is a video camera body comprising a solid state imager such as a charge coupled device (CCD), a head amplifier, and a lens 4 of an image pick-up system. The CHU 1 includes a viewfinder 2, a microphone 3 for picking up sound associated with the picture and a headset 5 comprising a headphone (not shown) and a microphone (not shown), and which is worn by the cameraman 6 for communication with the studio.

Referring also to Figure 2, the CHU 1 derives a video signal 8 such as a luminance signal Y (8a) and a colour difference signal U/V (8b). The video signal 8 is transmitted through a coaxial cable 7 to a camera control unit (CCU) 9 located in the studio or in an outside broadcast van 10. The video signal 8 is, for example, FM-modulated for transmission through the cable 7. The CCU 9 generates control and adjusting data, etc.

Within the studio or the van 10, there are provided a control panel 11 for performing video signal processing, and an audio mixing console 12 for mixing audio signals. While watching a monitor receiver 17 and an audio level meter (not shown), a video and audio mixer operator 14 adjusts the image signal and the sound signal supplied thereto from the CHU 1, whereby a video signal 15 and an audio signal 16 are converted, for example, to an NTSC television signal for broadcasting.

In addition to the luminance signal 8a and the colour difference signal 8b forming the video signal 8, data 19, a return video signal 22, a first microphone signal 20L, a second microphone signal 20R, an intercom signal 21, a power source voltage signal 18 such as an AC voltage signal of 240V, etc., are transmitted through the cable 7, as shown in the signal allocation of Figure 2. The return video signal 22 is a video signal transmitted to the CHU 1 from the CCU 9 side through the cable 7, such that a video signal picked-up at the CHU 1 and which is adjusted, received and reproduced at the control panel 11 while watching the monitor receiver 17, is transmitted through the CCU 9 and can be again reproduced in the viewfinder 2.

As shown in Figure 2, the DC or AC voltage source signal 18 utilized in the circuits (not shown) at the CHU 1 is transmitted as a voltage signal of, for example, 240V AC. Left and right audio signals picked up by the microphone 3 are transmitted as the first and second microphone output signals 20L and 20R. The intercom signal 21 is used for communication between the cameraman 6 who operates the CHU 1 and the mixer operator 14, who has a headset 13, in order to discuss technical problems or to make and broadcast programmes. The data 19 are control data which are utilized for the CCU 9 to adjust white balance, automatic iris control and the like at the CHU 1. These signals or data 19 are frequency-divided and frequency-multiplexed, so that they can be transmitted in two directions.

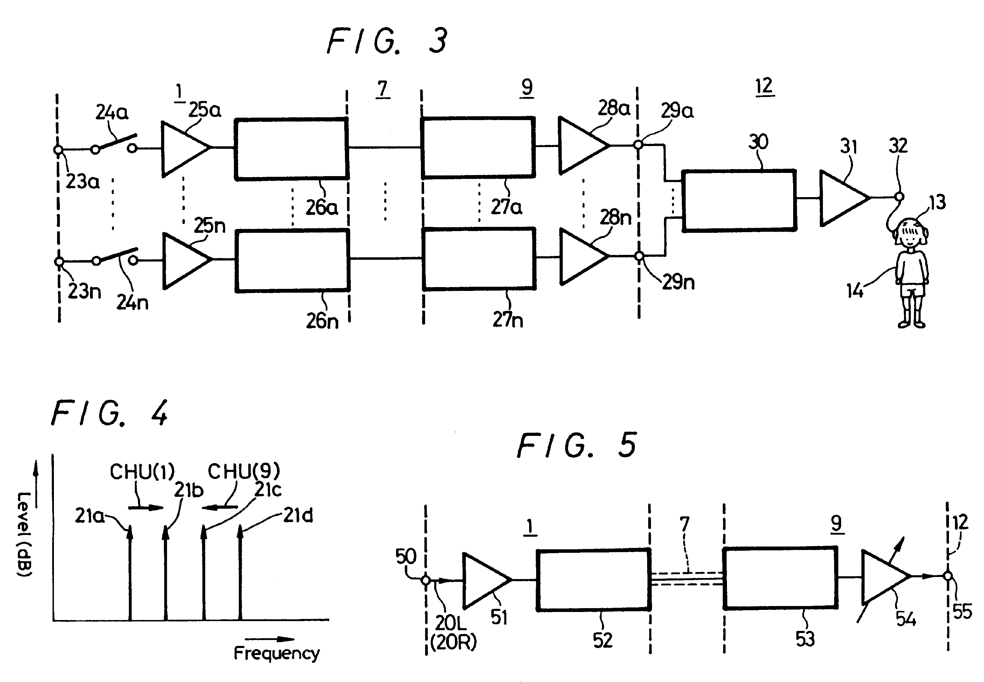

Figure 3 is a block diagram showing a transmission system for the above-described intercom signal 21, in particular, a so-called talk side thereof.

As shown in Figure 3, a plurality of video camera apparatuses, that is, CHUs 1 are connected through a plurality of CCUs 9 to, for example, the headset 13 of the mixer operator 14 at the audio mixing console 12, whereby the mixer operator 14 communicates with a plurality of cameramen 6 who operate the plurality of CHUs 1, via the intercom signal 21.

Referring to Figures 1 and 3, communication signals from the microphones of the headsets 5 worn by the cameramen 6 of n CHUs 1 are supplied to input terminals 23a to 23n. The communication signals applied to the input terminals 23a to 23n are supplied through switches 24a to 24n to amplifying circuits 25a to 25n and are thereby amplified. The communication signals amplified are, for example, FM-modulated by FM-modulators 26a to 26n and transmitted through the cables 7 to the CCUs 9, in which they are demodulated by demodulators 27a to 27n to provide original communication signals. The resulting communication signals are amplified by output amplifying circuits 28a to 28n, and then supplied through output terminals 29a to 29n to an adding circuit 30 provided within the audio console 12 in the studio or in the van 10, and thereby added. The added signal is amplified by an amplifier 31, and is then transmitted through an output terminal 32 to the receiver of the handset 13 of the mixer operator 14. In other words, the mixer operator 14 can receive the communication signals simultaneously from the plurality of cameramen 6 if the switches 24a to 24n at the CHUs 1 are turned ON.

With the video camera system shown in Figure 3, the headset 13 worn by the mixer operator 14 who operates, for example, the audio mixing console 12 provided within the studio or van 10 picks up noise, because although the switches 24a, ..., 24n at the CHU 1 are turned OFF, a noise level limit of the cable 7, for example, an FM noise produced through the modulation and demodulation circuits and the like is added to the communication signals and then outputted. If, for example, there are ten CHUs 1, the noise component is added ten times, and is then transmitted to the headset 13.

The intercom signal 21 shown in Figure 2 comprises two systems as shown in Figure 4. One system is formed of intercom signals 21a and 21c (hereinafter simply referred to as PRD_{IN}, PRD_{OUT}) which are used to communicate between the producer at the van 10 and the cameraman 6, in order to make the broadcast programme, and intercom signals 21b and 21d (hereinafter simply referred to as ENG _{IN}, ENG_{OUT}) which are used to communicate between the cameraman 6 and the engineer at the studio or van 10. Nevertheless, the intercom signal network lines of two systems are not limited to use by the producer or the engineer, and may be freely changed by the users. For this reason, if the two systems of the intercom signals of PRD_{IN}, PRD_{OUT}/ENG_{IN}, ENG_{OUT} are switched, complex work is involved in re-arranging the matrix, when the intercom signals of the two systems are utilized in various different ways by the user.

Figure 5 is a block circuit diagram for explaining a method of adjusting the level of an audio signal when an output signal such as an audio signal from the microphone 3 or the like is transmitted from the CHU 1 to the CCU 9 side.

Referring to Figure 5, the first or second microphone output signal 20L or 20R, such as a left or right audio signal is picked up by the microphone 3, and is then supplied to an input terminal 50. The microphone output signal 20L or 20R is supplied through a pre-amplifier 51 to a modulating circuit 52, in which it is, for example, FM-modulated. This FM-modulated signal is transmitted through the cable 7 to the CCU. Then, by a demodulating circuit 53 at the CCU 9, this transmitted signal is demodulated to provide a first or second original analogue microphone output signal 20L or 20R. This signal 20L or 20R is supplied to a variable gain amplifying circuit 54, in which it is controlled in gain, and is then fed through an output terminal 55 to the audio mixing console 12 in the studio or van 10. Thus, the gain-controlled signal microphone output signal 20L or 20R is adjusted to a pre-determined level and is then broadcast.

Alternatively, the following audio level adjusting method has been used in the past. In this method, an audio gain adjusting device is provided at the CHU 1 for manually adjusting the audio level. In that case, the mixer operator 14 at the CCU 9 supplies the cameraman 6 from the headset 13 with a gain level command via the intercom signal 21, so that the cameraman 6 determines a pre-determined level by operating the audio gain adjusting device on the basis of the command issued by the mixer operation 14.

With this video camera system, the first or second microphone output signal 20L or 20R is picked up at the CHU 1 with a predetermined level, and the gain of the first or second microphone output signal 20L or 20R is adjusted by the variable gain control amplifying circuit 54 at the CCU 9. Thus, the gain-adjusted first or second microphone output signal 20L or 20R is supplied from the output terminal 55 to the audio mixing console 12.

When ambient sounds are picked up by the microphone 3, the audio level fluctuates considerably. In general, the level of sound when the sound is picked up by the microphone 3 is approximately - 60 dB (2.2 mV PP). When such an audio signal is transmitted through the cable 7, a pre-determined noise level determined by the cable (TRIAX) 7 exists, so that, when the level of the sound picked up by the microphone 3 is reduced, a signal-to-noise (S/N) ratio relative to the noise level determined by the cable 7 is deteriorated. On the other hand, a dynamic range of an audio signal that can be transmitted via the cable 7 is about 20 dB, so that, even when the microphone level is increased, the transmission level is suppressed to approximately 20 dB.

US-A-4,300,166 describes a prior art video camera system with a television camera head unit connected to its control unit via a transmission system for transmitting video and control signals. US-A-4,326,221 describes a television monitoring system with remote control of camera units and means for selectively switching video and audio signals received from cameras to a central station.

According to the present invention there is provided a video camera system comprising:
at least one camera head unit having imaging means for generating a video signal and a microphone for generating a communication audio signal;
a camera control unit remote from said camera head unit for controlling said camera head unit;
transmitting means for transmitting said video signal from said imaging means and said audio signal from said microphone of said camera head unit to said camera control unit;
audio output means in said camera control unit;
switching means in said camera control unit for selectively connecting the transmitted audio signal received by said camera control unit to said audio output means for output of said transmitted audio signal; and
switching control means in said camera head unit for remotely controlling said switching means, a control signal derived from said switching control means being transmitted from said camera head unit to said switching means in said camera control unit.

The invention will now be described by way of example with reference to the accompanying drawings, in which:
Figure 1 is a block diagram of a known video camera system;
Figure 2 is a signal frequency diagram;
Figure 3 is a block diagram of a transmission path in the system of Figure 1;
Figure 4 is a signal frequency diagram;
Figure 5 is a block diagram of a transmission system in the video camera system of Figure 1;
Figure 6 (formed of Figures 6A and 6B) is a block diagram of a first embodiment of video camera system according to the present invention; and
Figure 7 and 8 are block diagrams of second and third embodiments of video camera system according to the present invention.

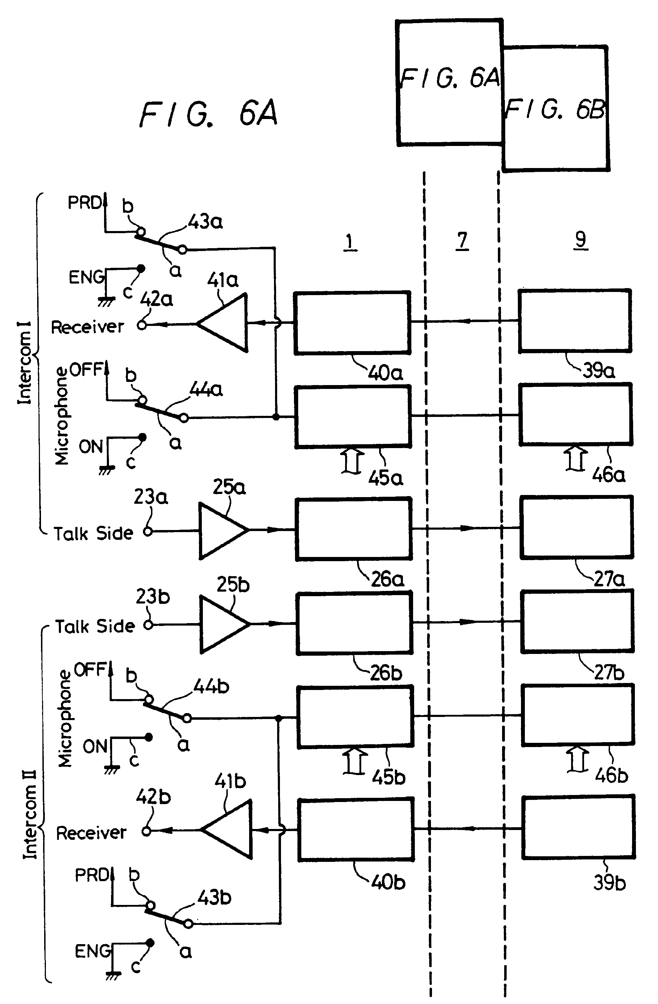

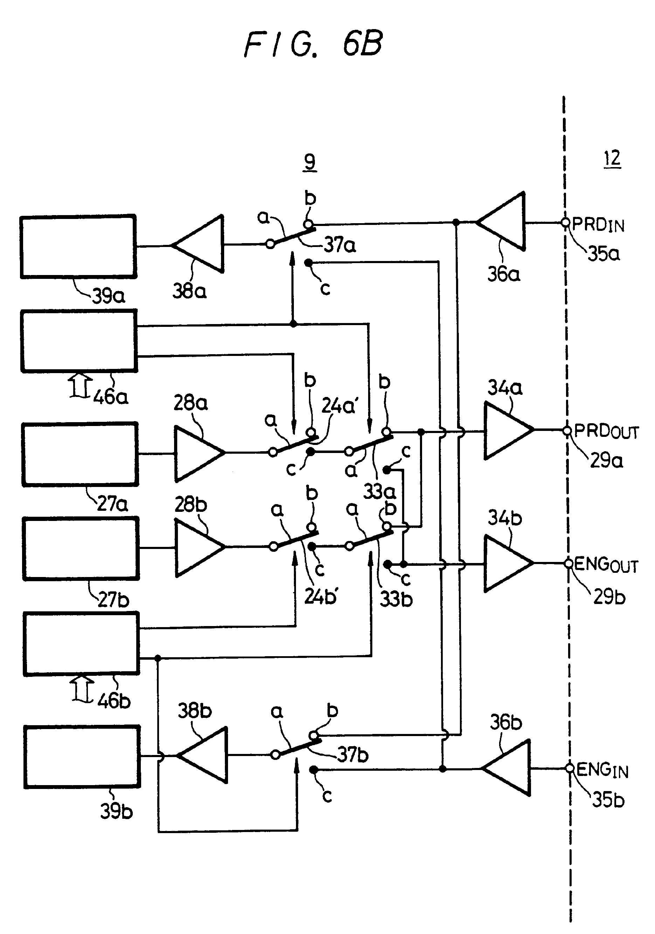

In the first embodiment, shown in Figure 6, communications between two parties utilize intercom signals of two systems. In this embodiment, the intercom signals PRD_{IN} and PRD_{OUT} are used for communication between the producer and the cameraman 6, and the intercom signals ENG_{IN} and ENG_{OUT} are used for communication between the engineer and the cameraman 6.

In Figure 6, intercoms I and II are the same in circuit arrangement, and therefore they will be described at the same time. The parts corresponding to the intercoms I and II are marked with the same reference numerals, but suffixed a and b respectively.

Initially, talk signals from the microphones of the headsets 5 worn by first and second cameramen 6 (see Figure 1) are respectively supplied to talk terminals 23a and 23b at the CHU 1. Similarly to the circuit arrangement shown in Figure 3, the talk signals are amplified by the amplifying circuits 25a and 25b within the CHU 1 and, for example, AM or FM-modulated by the modulating circuits 26a and 26b. The AM or FM-modulated signals are supplied through the coaxial cable 7 to the demodulating circuits 27a and 27b at the CCU 9, and are thereby demodulated. The demodulated signals are amplified by the amplifying circuits 28a and 28b and are supplied through a first switch 24a, second switches 33a and 33b, and amplifying circuits 34a and 34b to output terminals 29a and 29b at which there are developed the intercom signals PRD_{OUT} and ENG_{OUT}. In the foregoing, the switch 24a is operated similarly to the switch 24a provided at the CHU 1 side of FIgure 3, whereas the second switches 33a and 33b are used to changeover the two systems into independent systems. The output signals at the output terminals 29a and 29b are supplied through the adding circuit 30 and the output amplifying circuit 31 of the audio mixing console 12 to a sound reproducing device, such as a headphone or a loudspeaker of the headset 13 worn by the producer or engineer (mixer operator) 14.

Further, the intercom signals PRD_{IN} and ENG_{IN} from the microphone of the headsets 13 worn by the producer and engineer 14 at the studio are supplied to input terminals 35a and 35b of the CCU 9. The intercom signals from the producer and engineer 14 are supplied to amplifying circuits 36a and 36b, and the amplified signals therefrom are supplied through third switches 37a and 37b to amplifying circuits 38a and 38b, in which they are amplified once more. The thus amplified signals are AM or FM-modulated by modulating circuits 39a and 39b, and the modulated signals are supplied through the cables 7 to demodulating circuits 40a and 40b at the CHU 1 and are thereby demodulated. The demodulated signals are amplified by output amplifiers 41a and 41b, and are supplied to the headset 5 of the cameraman 6, thereby energising the headphone or loudspeaker of the headset 5 to produce a sound.

The CHU 1 is provided with microphone switching devices for switching the headset 5, that is, switches 44a and 44b. By the switching operation of the switches 44a and 44b, the first switches 24a and 24b provided at the CCU 9 are changed-over. Thus, when movable contacts a of the first switches 44a and 44b engage their fixed contacts b, control data designated by the data 19 in Figure 2 are supplied through the switches 44a and 44b to parallel-to-serial (P/S) converting circuits 45a and 45b, in which parallel data are converted to serial data. The converted serial data are supplied through the cables 7 to serial-to-parallel (S/P) converting circuits 46a and 46b at the CCU 9, in which serial data are converted to parallel data. Then, the movable contacts a of the first switches 24a and 24b engage their fixed contacts b, thereby to place the talk system in its OFF state. In this condition, the noise component of the cables 7, and the noise components produced in the modulating and demodulating circuits 26a, 26b, 27a and 27b do not reach the headset 13 of the producer or engineer 14, so that the signal-to-noise (S/N) ratio can be improved considerably.

When the movable contacts a of the switches 44a and 44b engage their fixed contacts c, the first switches 24a and 24b are turned ON, so talking is possible.

Moreover, various combinations are made possible by the switches 43a and 43b, which select the communication with the producer or engineer.

The movable contacts a of the switches 43a and 43b are used to control the movable contacts a of the second and third switches 33a, 33b, 37a and 37b via the signal lines formed of the P/S converters 45a and 45b, the cables 7 and the S/P converters 46a and 46b, in that order. In the condition that the movable contacts a of the switches 43a and 43b commonly engage the fixed contacts b as shown in Figure 6, the control signal of the P/S converter 46a controls this system such that the movable contacts a of the second and third switches 33a, 33b, 37a and 37b engage the fixed contacts b, whereby the intercoms I and II can communicate with each other via only the intercom signals PRD_{IN} and PRD_{OUT}, whereas they cannot communicate with each other via the intercom signals ENG_{IN} and ENG_{OUT}.

If the movable contacts a of the second and third switches 33a, 33b, 37a and 37b engage the fixed contacts b, the intercoms I and II can be communicated via the intercom signals ENG_{IN} and ENG_{OUT}, whereas they cannot communicate via the intercom signals PRD_{IN} and PRD_{OUT}. If the movable contact a of the switch 43a engages the fixed contact b as shown in Figure 6 and the movable contact a of the switch 43b engages the fixed contact c, the communication of the intercom I is made possible through the intercom signals PRD_{IN} and PRD_{OUT}, and the communication of the intercom II becomes possible through the intercom signals ENG_{IN} and ENG_{OUT}, respectively. Conversely, if the movable contact a of the switch 43b engages the fixed contact b as shown in Figure 6, and the movable contact a of the switch 43a engages the fixed contact c, then the communication of the intercom I is made possible through the intercom signals ENG_{IN} and ENG_{OUT}, and the communication of the intercom II becomes possible through the intercom signals PRD_{IN} and PRD_{OUT}, respectively. Unlike the known system in which the communication of the intercom I is limited to the intercom signals PRD_{IN} and PRD_{OUT}, and the intercom II is limited to the intercom signals ENG_{IN} and ENG_{OUT}, various independent communications corresponding to the user's requirements can be selected at the CHU 1.

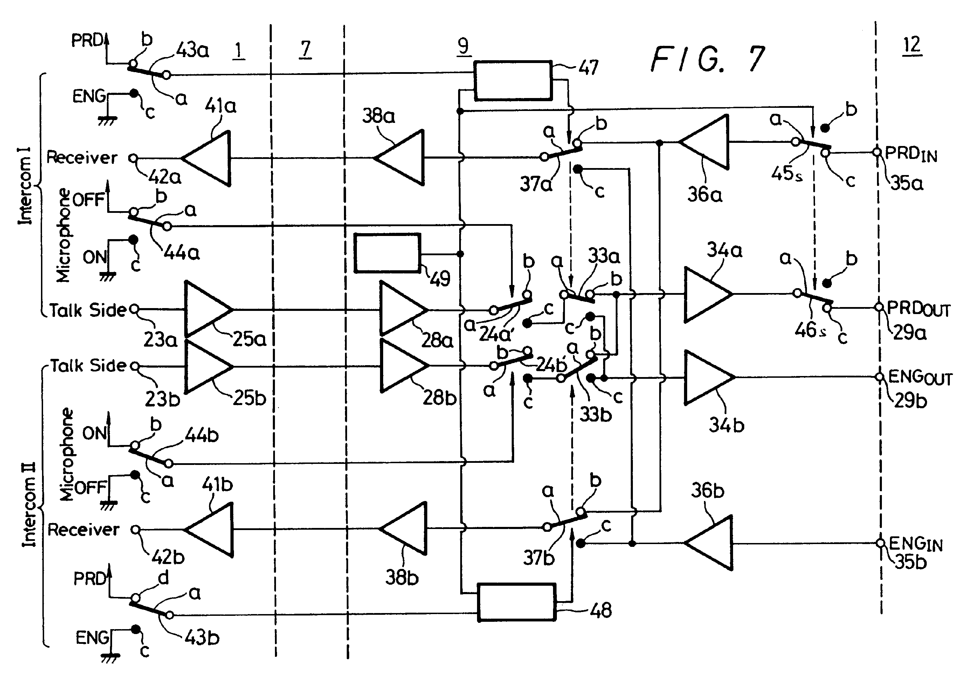

In the second embodiment shown in Figure 7, the modulating and demodulating circuits 26a, 39a, 26b, 39b, 27a, 40a, 27b and 40b provided in the receiver and talk system and the P/S converters 45a and 45b and the S/P converters 46a and 46b provided in the control line in the intercoms I and II shown in Figure 6 are not shown. Further, switches 45s and 46s are connected between the amplifying circuits 36a and 34a and the input and output terminals 35a and 29b. Also, control signals such as ON and OFF control signals are inputted from the control panel provided at a panel 49 in the CCU 9 to control the switches 37a, 37b, 33a, 33b, 45s and 46s.

Since the switches 24a, 24b, 33a, 33b, 37a and 37b are freely selected at the CHU 1 so that, when the producer or the engineer wants to communicate with the cameraman, it may be found that communication is impossible because the system is turned OFF. To remove this disadvantage, control items 1 and 2 shown in Table 1 below are provided to make the communication possible with priority for the producer or the engineer.

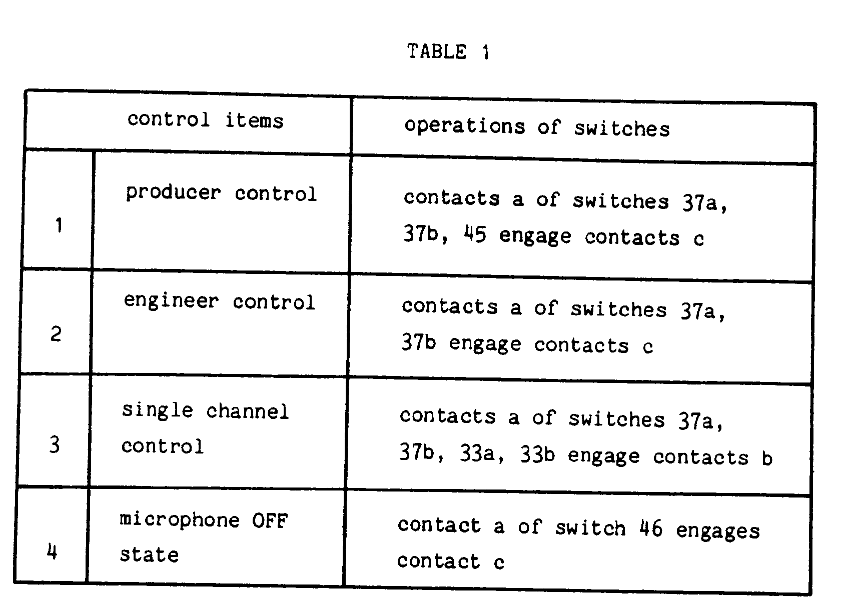

In the control item 3, the receiver system and the talk system are forced to be connected to the producer side so that the producer side can communicate with the intercoms I and II. In the control item 4, the switch 46 is turned OFF, so that all talk signals from the CHU 1 are interrupted. These control operations can be carried out with ease by supplying the control signals from the control panel provided at the panel 49 to gate circuits 47 and 48.

Thus with each of the first and second embodiments it is possible to reduce the noise components which enter the camera control unit side from the camera head unit side when the microphone of the headset is turned OFF. Moreover, the intercom signals of two systems which can be switched only by the producer and the engineer can be independently utilized, so that the video camera system can be used in a wide variety of application fields in compliance with the user's requirements. In particular, unlike the known system in which only one system is utilized in the two systems and one camera head unit is employed, the two systems can be selectively operated.

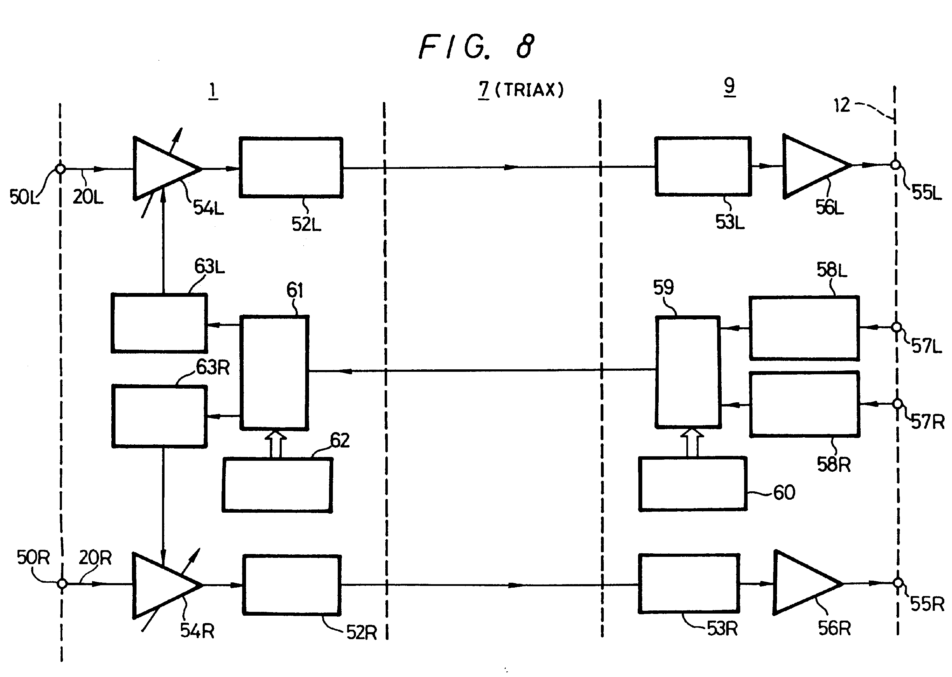

In the third embodiment shown in Figure 8, the microphone 3 derives, for example, left and right two channel output signals. More particularly, first microphone output signals 20L and 20R picked up by the left and right microphones 3 are respectively supplied to input terminals 50L and 50R, and these output signals are supplied to variable gain control amplifying circuits 54L and 54R provided at the CHU 1. Similarly to Figure 5, the output signals from the variable gain control amplifying circuits 54L and 54R are, for example, AM or FM-modulated by modulating circuits 52L and 52R, and supplied through the cables 7 to demodulating circuits 53L and 53R provided at the CCU 9 to be demodulated. The demodulated output signals from the demodulating circuits 53L and 53R are amplified by amplifying circuits 56L and 56R, and are developed at output terminals 55L and 55R, and thereby supplied to the audio mixing console 12.

In this embodiment, analogue DC signals or digital signals of three or four bits are applied to input terminals 57L and 57R connected to the audio mixing console 12, and are supplied to microphone level adjusting circuits 58L and 58R. The signals of constant level adjusted by the adjusting circuits 58L and 58R are supplied to a P/S converter 59, in which parallel signals (or parallel data) are converted to serial signals (or serial data). This conversion is performed by a microcomputer or a central processing unit (CPU) 60 provided at the CCU 9. The data (signals) converted to serial data by the P/S converter 59 are supplied through the coaxial cable 7 to a converter 61 in the form of the data 19 shown, for example, in Figure 2, and in which they are converted to parallel signals or parallel data. This conversion is performed by a central processing unit (CPU) 62 provided at the CHU 1, and the data (or the parallel signals) are supplied to gain control circuits 63L and 63R. The gains of the variable gain control circuits 54L and 54R are varied by the output signals from the gain control circuits 63L and 63R. The microphone output signals are varied in a range of from approximately - 60 dB to - 40 dB in practice, whereby the first and second microphone output signals 20L and 20R can be remote-controlled from the CCU 9 via the cable 7. In that case, the mixer operator 14 can adjust the gain at the CHU 1 in dependence on the characteristics of the cable 7.

While the gains of the variable gain amplifying circuits 54L and 54R are varied by the output signals of the variable gain control circuits 63L and 63R provided at the CHU 1 in the above-described embodiment, the variable gain can be varied by taps.

With embodiments of video camera system according to the present invention, the noise components at the headset at the CCU 9 can be reduced. Moreover, it is possible to have a video camera system in which the intercom signals of two systems can be independently transmitted as several intercom signals.

Furthermore, the gain can be controlled depending upon the characteristics of the coaxial cable, whereby proper microphone output signals without distortion can be obtained in response to changes of the sound pick-up condition.

## Claims

1. A video camera system comprising:
at least one camera head unit (1) having imaging means for generating a video signal and a microphone (5) for generating a communication audio signal;
a camera control unit (9) remote from said camera head unit for controlling said camera head unit (1);
transmitting means (7) for transmitting said video signal from said imaging means and said audio signal from said microphone (5) of said camera head unit (1) to said camera control unit (9);
audio output means (29a, 29b) in said camera control unit (9);
switching means (33a, 33b) in said camera control unit (9) for selectively connecting the transmitted audio signal received by said camera control unit (9) to said audio output means (29a, 29b) for output of said transmitted audio signal;
and
switching control means (43a, 43b) in said camera head unit (1) for remotely controlling said switching means (33a, 33b), a control signal derived from said switching control means (43a, 43b) being transmitted from said camera head unit (1) to said switching means (33a, 33b) in said camera control unit (9).

2. A video camera system according to claim 1 comprising
a plurality of camera head units (1) each having imaging means and a microphone (5) wherein:
said camera control unit (9) controls said plurality of camera head units (1);
said transmitting means (7) transmits video signals and audio signals from said plurality of camera head units (1) to said camera control unit (9);
said switching means (33a, 33b) selectively connects said transmitted audio signals received by said camera control unit (6) to said audio output means (29a, 29b) under the control of said switching control means (43a, 43b) in said camera head units (1), whereby the audio signals output at said audio output means (29a, 29b) of said camera control unit (9) can be selected at the camera head units (1).

3. A system according to claim 1 or claim 2 where said control signal derived from said switching control means (43a, 43b) is superimposed upon said video and audio signals and is transmitted via said transmitting means (7) to said switching means (33a, 33b) in said camera control unit (9).

4. A system according to any one of the preceding claims further comprising audio signal output means (5) in said camera head units (1), a plurality of audio signal input means (35a, 35b) in said camera control unit (9), and second switching means (37a, 37b) in said camera control unit (9) selectively connecting an audio input signal from said plurality of audio signal input means (35a, 35b) to said transmitting means (7), said switching control means (43a, 43b) controlling the operation of said second switching means, whereby audio signals inputted from said plurality of audio signal input means (35a, 35b) are selectively transmitted via said transmitting means (7) to said audio signal output means (5) in said camera head unit (1).

5. A video camera system according to any one of the preceding claims wherein the audio output means comprises a plurality of audio outputs (29a, 29b), the camera control unit (9) comprises third switching means (33a, 33b) for selectively connecting the transmitted audio signal received by the camera control unit (9) to a selected one of said plurality of audio outputs (29a, 29b) and the camera head unit (1) comprises second switching control means (43a, 43b) for remotely controlling the third switching means (33a, 33b).

6. A video camera system according to any one of the preceding claims wherein the microphone and audio output means form part of an audio intercom between the camera head unit (1) and the camera control unit (9).

7. A video camera system according to any one of the preceding claims wherein:
said transmitting means (7) is arranged to transmit a gain control signal from said camera control unit (9) to said camera head unit (1);
gain varying means (54L, 54R) are provided in said camera head unit (1) for varying a gain of the audio signal from said microphone (5); gain control signal generating means (63L, 63R) are provided in said camera head unit (1) for controlling a gain of said gain varying means (54L, 54R);
gain control signal input means (61) are provided in said camera head unit (1) for receiving said gain control signal; and
supplying means (58L, 58R) are provided in said camera control unit (9) for supplying said gain control signal through said transmitting means (7) to said gain control signal input means (61), wherein the gain of said audio signal is controlled by said gain varying means (54L, 54R) provided within said camera head unit (1) under the control of said camera control unit (9).

## Revendications

1. Système caméra vidéo comprenant :
au moins une unité frontale de caméra (1) ayant un dispositif d'imagerie pour générer un signal vidéo et un microphone (5) pour générer un signal audio de communication ;
une unité de commande de caméra (9) distante de ladite unité frontale de caméra pour télécommander ladite unité frontale caméra (1) ;
un dispositif de transmission (7) pour transmettre ledit signal vidéo dudit dispositif d'imagerie et ledit signal audio dudit microphone (5) de ladite unité frontale de caméra (1) à ladite unité de commande caméra (9) ;
un dispositif de sortie audio (29a, 29b) dans ladite unité de commande de caméra (9);
un dispositif de commutation (33a, 33b) dans ladite unité de commande de caméra (9) pour relier sélectivement le signal audio transmis, reçu par ladite unité de commande de caméra (9) audit dispositif de sortie audio (29a, 29b) pour la sortie dudit signal audio transmis ; et
un dispositif de commande de commutation (43a, 43b) dans ladite unité frontale de caméra (1) pour télécommander ledit dispositif de commutation (33a, 33b), un signal de commande dérivé dudit dispositif de commande de commutation (43a, 43b) transmis par ladite unité frontale de caméra (1) audit dispositif de commutation (33a, 33b) de ladite unité de commande de caméra (9).

2. Système de caméra vidéo selon la revendication 1, comprenant une pluralité d'unités frontales de caméra (1) ayant chacune un dispositif d'imagerie et un microphone (5) dans lequel :
ladite unité de commande de caméra (9) commande ladite pluralité d'unités frontales de caméra (1) ;
ledit dispositif de transmission (7) transmet des signaux vidéo et des signaux audio de ladite pluralité d'unités frontales de caméra (1) à ladite unité de commande de caméra (9) ;
ledit dispositif de commutation (33a, 33b) relie sélectivement lesdits signaux audio transmis, reçus par ladite unité de commande de caméra (6), audit dispositif de sortie audio (29a, 29b) sous la commande dudit dispositif de commande de commutation (43a, 43b) dans ladite unité frontale de caméra (1), la sortie des signaux audio ainsi fournis audit dispositif de sortie audio (29a, 29b) de ladite unité de commande de caméra (9) peut être sélectionnée sur les unités frontales de caméra (1).

3. Système selon la revendication 1 ou la revendication 2 dans lequel ledit signal de commande dérivé dudit dispositif de commande de commutation (43a, 43b) est superposé auxdits signaux vidéo et audio et est transmis via ledit dispositif de transmission (7) audit dispositif de commutation (33a, 33b) de ladite unité de commande de caméra (9).

4. Système selon l'une quelconque des revendications précédentes comprenant en outre un dispositif de sortie de signal audio (5) dans lesdits unités frontales de caméra (1), une pluralité de dispositifs d'entrée de signaux audio (35a, 35b) dans ladite unité de commande caméra (9), et le second dispositif de commutation (37a, 37b) dans ladite unité de commande de caméra (9) reliant sélectivement un signal d'entrée audio de ladite pluralité de dispositifs d'entrée de signaux audio (35a, 35b) audit dispositif de transmission (7), ledit dispositif de commande de commutation (43a, 43b) commandant le fonctionnement dudit second dispositif de commutation, des signaux audio ainsi introduits par ladite pluralité de dispositifs d'entrée de signaux audio (35a, 35b) sont sélectivement transmis via ledit dispositif de transmission (7) audit dispositif de sortie de signaux audio (5) de ladite unité frontale de caméra (1).

5. Système de caméra vidéo selon l'une quelconque des revendications précédentes dans lequel le dispositif de sortie audio comprend une pluralité de sorties audio (29a, 29b), l'unité de commande de caméra (9) comprend un troisième dispositif de commutation (33a, 33b) pour relier sélectivement le signal audio transmis reçu par l'unité de commande de caméra (9) à une pluralité sélectionnée desdites pluralités de sorties audio (29a, 29b) et l'unité frontale de caméra (1) comprend un second dispositif de commande de commutation (43a, 43b) pour télécommander le troisième dispositif de commutation (33a, 33b).

6. Système de caméra vidéo selon l'une quelconque des revendications précédentes dans lequel le microphone et le dispositif de sortie audio forment une partie d'un dispositif d'intercommunication audio entre l'unité frontale de caméra (1) et l'unité de commande de caméra (9).

7. Système de caméra vidéo selon l'une quelconque des revendications précédentes dans lequel :
ledit dispositif de transmission (7) est disposé pour transmettre un signal de commande de gain de ladite unité de commande de caméra (9) à ladite unité frontale de caméra (1) ;
des dispositifs faisant varier le gain (54L, 54R) sont placés dans ladite unités frontales de caméra (1) pour faire varier le gain du signal audio dudit microphone (5) ;
des dispositifs de génération de signal de commande de gain (63L, 63R) sont placés dans ladite unité frontale de caméra (1) pour commander le gain dudit dispositif faisant varier le gain (54L, 54R) ;
des dispositif d'entrée de signaux de commande de gain (61) sont placés dans ladite unité frontale de caméra (1) pour recevoir ledit signal de commande de gain; et
des dispositif d'application (58L, 58R) sont placés dans ladite unité de commande de caméra (9) pour fournir ledit signal de commande de gain via ledit dispositif de transmission (7) audit dispositif d'entrée de signal de commande de gain (61), dans lequel le gain dudit signal audio est commandé par ledit dispositif faisant varier le gain (54L, 54R) placé dans ladite unité frontale de caméra (1) sous la commande de ladite unité de commande de caméra (9).

## Patentansprüche

1. Videokamerasystem mit:
wenigstens einer Kamera-Kopfeinheit (1), die eine Abbildungseinrichtung zum Erzeugen eines Videosignals und ein Mikrofon (5) zum Erzeugen eines Kommunikations-Audiosignals aufweist;
einer von der Kamera-Kopfeinheit entfernt angeordneten Kamera-Steuereinheit (9) zum Steuern der Kamera-Kopfeinheit (1);
einer Übertragungseinrichtung (7) zum Übertragen des Videosignals von der Abbildungseinrichtung und des Audiosignals vom Mikrofon (5) der Kamera-Kopfeinheit (1) zur Kamera-Steuereinheit (9);
einer Audio-Ausgangseinrichtung (29a, 29b) in der Kamera-Steuereinheit (9);
einer Umschalteinrichtung (33a, 33b) in der Kamera-Steuereinheit (9) zum wahlweisen Anlegen des übertragenen, durch die Kamera-Steuereinheit (9) aufgenommenen Audiosignals an die Audio-Ausgangseinrichtung (29a, 29b) zwecks Ausgabe des übertragenen Audiosignals; und
einer Umschalt-Steuereinrichtung (43a, 43b) in der Kamera-Kopfeinheit (1) zur Fernsteuerung der Umschalteinrichtung (33a, 33b), wobei ein von der Umschalt-Steuereinrichtung (43a, 43b) stammendes Steuersignal von der Kamera-Kopfeinheit (1) zur Umschalteinrichtung (33a, 33b) in der Kamera-Steuereinheit (9) übertragen wird.

2. Videokamerasystem nach Anspruch 1 mit
einer Mehrzahl von Kamera-Kopfeinheiten (1), deren jede eine Abbildungseinrichtung und ein Mikrofon (5) aufweist, wobei:
die Kamera-Steuereinheit (9) die Mehrzahl der Kamera-Kopfeinheiten (1) steuert;
die Übertragungseinrichtung (7) Videosignale und Audiosignale von der Mehrzahl der Kamera-Kopfeinheiten (1) zur Kamera-Steuereinheit (9) überträgt;
die Umschalteinrichtung (33a, 33b) wahlweise die übertragenen, durch die Kamera-Steuereinheit (9) aufgenommenen Audiosignale unter der Steuerung der Umschalt-Steuereinrichtung (43a, 43b) in den Kamera-Kopfeinheiten (1) an die Audio-Ausgangseinrichtung (29a, 29b) anlegt, wodurch die Ausgabe der Audiosignale an der Audio-Ausgangseinrichtung (29a, 29b) der Kamera-Steuereinheit (9) an den Kamera-Kopfeinheiten (1) gewählt werden kann.

3. System nach Anspruch 1 oder 2, in welchem das von der Umschalt-Steuereinrichtung (43a, 43b) stammende Steuersignal den Video- und Audiosignalen überlagert und über die Übertragungseinrichtung (7) zur Umschalteinrichtung (33a, 33b) in der Kamera-Steuereinheit (9) übertragen wird.

4. System nach einem der vorhergehenden Ansprüche, das ferner Audiosignal-Ausgangseinrichtungen (5) in den Kamera-Kopfeinheiten (1), eine Mehrzahl von Audiosignal-Eingangseinrichtungen (35a, 35b) in der Kamera-Steuereinheit (9) und eine zweite Umschalteinrichtung (37a, 37b) in der Kamera-Steuereinheit (9) umfaßt, die ein Audio-Eingangssignal von der Mehrzahl der Audiosignal-Eingangseinrichtungen (35a, 35b) wahlweise auf die Übertragungseinrichtung (7) schaltet, wobei die Umschalt-Steuereinrichtung (43a, 43b) die Betätigung der zweiten Umschalteinrichtung steuert, wodurch an der Mehrzahl der Audiosignal-Eingangseinrichtungen (35a, 35b) eingegangene Audiosignale wahlweise über die Übertragungseinrichtung (7) zur Audiosignal-Ausgangseinrichtung (5) in der Kamera-Kopfeinheit (1) übertragen werden.

5. Videokamerasystem nach einem der vorhergehenden Ansprüche, in welchem die Audio-Ausgangseinrichtung mehrere Audio-Ausgänge (29a, 29b), die Kamera-Steuereinheit (9) eine dritte Umschalteinrichtung (33a, 33b) zum wahlweisen Anlegen des übertragenen, durch die Kamera-Steuereinheit (9) aufgenommenen Audiosignals an einen ausgewählten der mehreren Audio-Ausgänge (29a, 29b) und die Kamera-Kopfeinheit (1) eine zweite Umschalt-Steuereinrichtung (43a, 43b) zur Fernsteuerung der dritten Umschalteinrichtung (33a, 33b) aufweist.

6. Videokamerasystem nach einem der vorhergehenden Ansprüche, in welchem das Mikrofon und die Audio-Ausgangseinrichtung Teil einer Audio-Wechselsprechanlage zwischen der Kamera-Kopfeinheit (1) und der Kamera-Steuereinheit (9) bilden.

7. Videokamerasystem nach einem der vorhergehenden Ansprüche, in welchem:
die Übertragungseinrichtung (7) so ausgebildet ist, daß sie ein Verstärkungssteuersignal von der Kamera-Steuereinheit (9) zur Kamera-Kopfeinheit (1) überträgt;
eine Verstärkungs-Änderungseinrichtung (54L, 54R) in der Kamera-Kopfeinheit (1) zum Verändern einer Verstärkung des Audiosignals vom Mikrofon (5) vorgesehen ist;
eine Verstärkungssteuersignal-Erzeugungseinrichtung (63L, 63R) in der Kamera-Kopfeinheit (1) zum Steuern einer Verstärkung der Verstärkungs-Änderungseinrichtung (54L, 54R) vorgesehen ist;
eine Verstärkungssteuersignal-Eingangseinrichtung (61) in der Kamera-Kopfeinheit (1) zur Aufnahme des Verstärkungssteuersignals vorgesehen ist; und
in der Kamera-Steuereinheit (9) eine Zufuhreinrichtung (58L, 58R) vorgesehen ist, die das Verstärkungssteuersignal über die Übertragungseinrichtung (7) der Verstärkungssteuersignal-Eingangseinrichtung (61) zuführt, wobei die Verstärkung des Audiosignals durch die innerhalb der Kamera-Kopfeinheit (1) vorgesehene Verstärkungs-Änderungseinrichtung (54L, 54R) unter der Steuerung der Kamera-Steuereinheit (9) gesteuert ist.
